**Europäisches Patentamt**

(19) **European Patent Office**

**Office européen des brevets**

(11) Veröffentlichungsnummer: **0 132 597**
**B1**

(12) **EUROPÄISCHE PATENTSCHRIFT**

(45) Veröffentlichungstag der Patentschrift:
01.04.87

(21) Anmeldenummer: **84107217.6**

(22) Anmeldetag: **23.06.84**

(51) Int. Cl.⁴: **B 62 D 7/16**

(54) **Spurstangengelenk.**

(30) Priorität: **30.07.83 DE 3327550**

(43) Veröffentlichungstag der Anmeldung:
**13.02.85 Patentblatt 85/7**

(45) Bekanntmachung des Hinweises auf die Patenterteilung:
**01.04.87 Patentblatt 87/14**

(84) Benannte Vertragsstaaten:
**AT BE DE FR GB IT NL SE**

(56) Entgegenhaltungen:
**DE - A - 1 121 947**
**DE - A - 3 118 254**
**FR - A - 1 319 227**
**US - A - 1 829 306**
**US - A - 4 428 450**

(73) Patentinhaber: **TRW Ehrenreich GmbH & Co. KG,**
**Hansa-Allee 190, D-4000 Düsseldorf 11 (DE)**

(72) Erfinder: **Schnitzler, Franz Dieter, Mettmanner**
**Strasse 117, D-4010 Hilden (DE)**

(74) Vertreter: **Patentanwälte Dipl.-Ing. Alex Stenger**
**Dipl.-Ing. Wolfram Watzke Dipl.-Ing. Heinz J. Ring,**
**Kaiser-Friedrich-Ring 70, D-4000 Düsseldorf 11 (DE)**

## Beschreibung

Gegenstand der Erfindung ist ein Spurstangengelenk für Kraftfahrzeuge zur Anlenkung der inneren Enden zweier Spurstangen an einer vom einem Lenkgetriebe betätigten Lenkstange, wobei die inneren Enden der Spurstange als angeformte Gelenkteile gestaltet sind, die jeweils zwischen ein äusseres und ein inneres Lagerteil ragen, wobei zwischen den Gelenkteilen und einerseits dem äusseren sowie andererseits dem inneren Lagerteil Einlagen angeordnet sind und wobei das äussere Lagerteil, die Gelenkteile, die Einlagen und das innere Lagerteil mit wenigstens einem an der Lenkstange befestigten Spannbolzen vorgespannt sind.

Aus der GB-A-1 463 358 ist ein gattungsgemässes Spurstangengelenk bekannt, bei dem die inneren Enden der Spurstangen als Gelenkteile gestaltet sind und jeweils zwischen ein äusseres und ein inneres Lagerteil ragen, wobei zwischen den Gelenkteilen einerseits sowie zwischen den äusseren und inneren Lagerteilen andererseits Zwischenlegscheiben angeordnet sind. Bei diesem bekannten Spurstangengelenk sind die inneren Gelenke der Spurstangen als Gleitlager ausgebildet, die mit spanlosen Fertigungstechniken nicht hergestellt werden können und deshalb teuer sind.

Aus der US-A-1 829 306 sind Spurstangengelenke für Kraftfahrzeuge bekannt geworden, die aus an der Spurstange befestigten Kugelschalen und darin beweglich angeordneten Kugelkörpern bestehen, die an den Lenkhebeln befestigt sind. Dabei sind die Kugelschalen als Abkröpfungen der Spurstangen ausgebildet. Auch diese bekannten Spurstangengelenke können mit spanlosen Fertigungstechniken nicht hergestellt werden und sind deshalb teuer.

Schliesslich ist aus der DE-B-1 121 947 noch ein Spurstangengelenk bekannt geworden, welches als Doppelkugelgelenk ausgebildet ist, bei dem die inneren Enden der Spurstangen mit Kugelschalenausschnitten an dem Kugelkopf eines Gelenkzapfens abgestützt sind und mit in einem Gelenkgehäuse eingesetzten Kugelhalbschalen in dieser Lage festgehalten werden. Auch dieses bekannte Spurstangengelenk kann mit spanlosen Fertigungstechniken nicht hergestellt werden und ist deshalb teuer.

Davon ausgehend liegt der Erfindung die Aufgabe zugrunde, ein einfach konstruiertes Spurstangengelenk zu schaffen, dessen Einzelteile spanlos hergestellt werden können und im montierten Zustand ein allseits bewegliches Federgelenk bilden.

Zur technischen Lösung dieser Aufgabe wird ein gattungsgemässes Spurstangengelenk vorgeschlagen, bei dem

a) die Spurstangen U-förmig profiliert und ihre Gelenkteile als Abkröpfungen ausgebildet sind,

b) das äussere Lagerteil als topfförmige äussere Lagerschale ausgebildet ist, in die die Abkröpfungen eintauchen,

c) das innere Lagerteil als hülsenförmig ausgebildete innere Lagerschale ausgebildet ist und

d) die Einlagen federelastisch sind.

Bei einem nach dieser technischen Lehre ausgebildeten Spurstangengelenk besteht der Erfindungsgedanke darin, die mit ihren Abkröpfungen formschlüssig in ein von einer äusseren und einer inneren Lagerschale gebildetes Gelenkgehäuse eingreifenden Spurstangen unter Verwendung von federelastischen Einlagen gegen die beiden Lagerschalen abzufedern und das auf diese Weise gebildete Federgelenk mit einem die Konstruktionsteile durchdringenden Bolzen vorzuspannen, der gleichzeitig die Verbindung mit der Lenkstange herstellt. Alle Einzelteile eines solchen Spurstangengelenkes können spanlos hergestellt werden. Die Spurstangen mit ihren Abkröpfungen können aus einem Stahlblech geformt oder aus einem glasfaserverstärkten Kunststoff hergestellt werden. Bei den beiden Lagerschalen handelt es sich um einfache Konstruktionsteile, die aus Stahlblech geformt und ohne spanabhebende Bearbeitung verwendet werden können. Die äusseren und inneren federelastischen Einlagen werden zweckmässig aus einem federelastischen Gummi oder auch aus einem thermoplastischen Kunststoff hergestellt und distanzieren die Lagerpartner voneinander. Die im Fahrbetrieb auftretenden Gelenkausschläge sind so gering, dass zwischen den Gelenkpartner kein Schlupf ermöglicht werden muss. Aus diesem Grunde können die federelastischen Einlagen auch bei der Vormontage schon fest mit den ihnen zugeordneten Lagerschalen verbunden werden. Das erfindungsgemäss als Federgelenk ausgebildete Spurstangengelenk ist absolut wartungsfrei und hat eine ausserordentlich hohe Lebensdauer. Damit leistet die Erfindung einen ausserordentlichen Beitrag zur Sicherheit im Strassenverkehr.

Bei einer praktischen Ausführungsform mit nur einem Spannbolzen kann die äussere Lagerschale einen kreisförmigen Grundriss besitzen und eine ringförmig ausgebildete äussere Einlage aufnehmen. Die inneren Einlagen sind halbschalenförmig gestaltet und voneinander getrennt, damit sie nicht zwischen den Rändern an den Abkröpfungen der Spurstangen zerquetscht werden. Die innere Lagerschale kann bei dieser ersten Ausführungsform aus einer einfachen, rohrförmigen Hülse und einer Spannscheibe bestehen. Bei diesem Spurstangengelenk liegt der Drehpunkt in Fahrzeugmitte, so dass die Spurstangen eine optimale Länge haben, um die Spuränderung beim Ein- und Ausfedern klein zu halten.

Bei einer weiteren, praktischen Ausführungsform mit zwei Spannbolzen besitzt die äussere Lagerschale zweckmässig einen ovalen Grundriss und die äusseren und inneren Einlagen sind jeweils halbschalenförmig gestaltet. Auch bei dieser Ausführungsform kann die innere Lagerschale aus zwei rohrförmigen Hülsen bestehen, die dann mit einem gemeinsamen Spannblech untereinander verbunden werden. In weiterer Ausgestaltung dieser Ausführungsform ist es möglich, als zusätzliche Sicherung das Spannblech mit seitlichen Lappen auf einem die äussere Lagerschale zwischen den beiden Federgelenken durchsetzenden Bolzen zu befestigen, wenn die Federgelenke vorgespannt sind.

Um die Verbindung des bzw. der Federgelenke mit der Lenkstange zu verbessern, hat es sich als zweckmässig erwiesen, die äussere Lagerschale mit einer oder mit zwei Lagerbuchsen von der Lenkstange zu distanzieren, welche gleichzeitig den bzw. die Spannbolzen umgeben.

Weitere Einzelheiten und Vorteile des Gegenstandes der Erfindung ergeben sich aus der nachfolgenden Beschreibung der zugehörigen Zeichnungen, in denen zwei verschiedene Ausführungsformen eines erfindungsgemäss ausgebildeten Spurstangengelenkes schematisch dargestellt worden sind. In den Zeichnungen zeigen:

Fig. 1 ein Spurstangengelenk mit nur einem Spannbolzen entlang der Linie I-I in Fig. 2 geschnitten in Seitenansicht;

Fig. 2 dasselbe Spurstangengelenk gemäss Fig. 1 in Draufsicht;

Fig. 3 dasselbe Spurstangengelenk entlang der Linie III-III in Fig. 1 geschnitten;

Fig. 4 ein Spurstangengelenk mit zwei Spannbolzen entlang der Linie V-V in Fig. 5 geschnitten in Seitenansicht;

Fig. 5 dasselbe Spurstangengelenk in Draufsicht;

Fig. 6 dasselbe Spurstangengelenk entlang der Linie VI-VI in Fig. 4 geschnitten;

Fig. 7 das Schema einer Zahnstangenlenkung mit Mittenabnahme in Draufsicht.

Bei einer Zahnstangenlenkung mit Mittenabnahme, wie sie in der Fig. 7 schematisch dargestellt worden ist, sind die inneren Enden von Spurstangen 1, 2 an einer Lenkstange 3 angelenkt, die über ein Getriebe 4 mit dem Lenkrad des Kraftfahrzeuges verbunden ist. Die äusseren Enden der beiden Spurstangen 1, 2 sind über Lenker 5 mit Rädern 6 verbunden, die auf diese Weise durch eine Verschiebung der Lenkstange 3 zur einen oder anderen Seite hin aus der Geradeausfahrt in eine Kurvenfahrt eingeschlagen werden können.

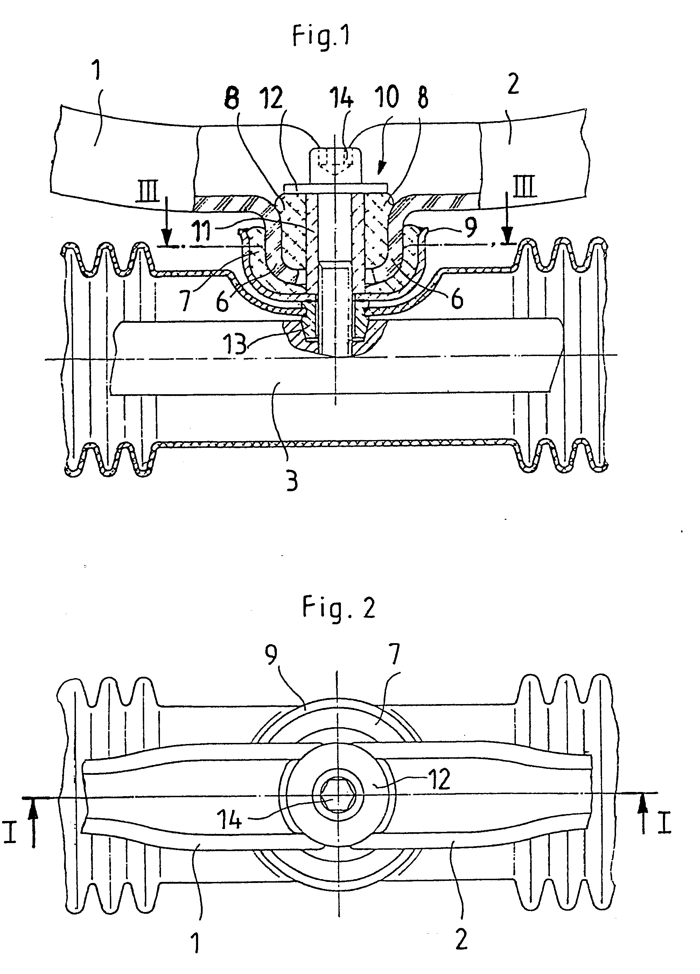

Bei dem in den Fig. 1 bis 3 dargestellten Spurstangengelenk besitzen die beiden Spurstangen 1, 2 ein U-förmiges Profil und sind an ihren inneren Enden mit Abkröpfungen 6 versehen, deren Steg am Ende halbkreisförmig ausgeschnitten ist. Mit ihren Abkröpfungen 6 greifen die beiden Spurstangen 1, 2 unter Zwischenlage einer federelastischen äusseren Einlage 7 und zwei federelastischen inneren Einlagen 8 in ein Gelenkgehäuse ein, welches von einer äusseren Lagerschale 9 und einer inneren Lagerschale 10 gebildet wird.

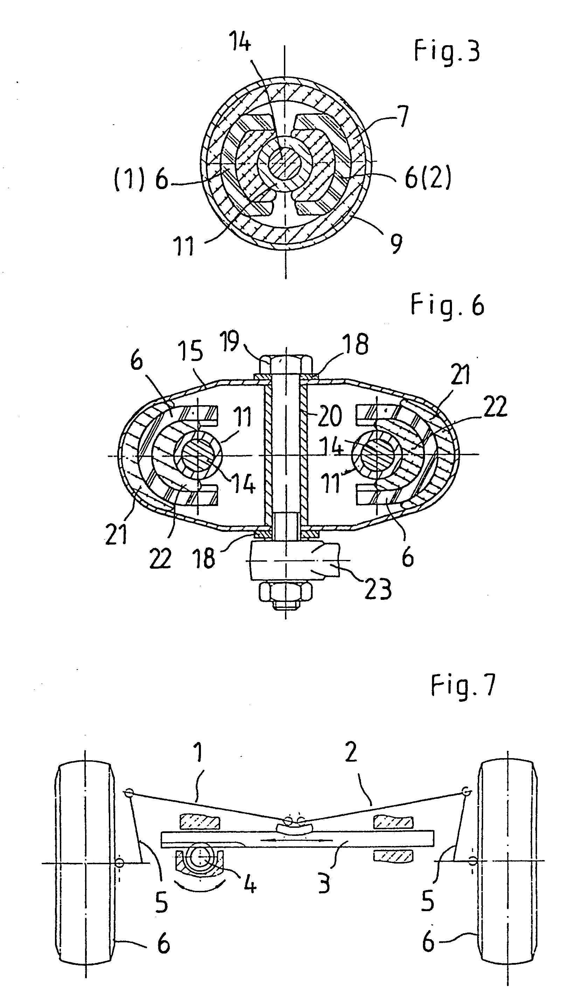

Die äussere Lagerschale 9 besitzt einen kreisförmigen Grundriss (Fig. 3) und nimmt die ringförmig gestaltete äussere Einlage 7 auf, die mit ihr fest verbunden sein kann. Im Boden ist die äussere Einlage 7 kreisförmig ausgeschnitten. Die innere Lagerschale 10 besteht aus einer rohrförmigen Hülse 11, die sich mit ihrem unteren Ende auf der äusseren Lagerschale 9 abstützt, und aus einer Spannscheibe 12. Zwischen der Lenkstange 3 und der äusseren Lagerschale 9 ist eine Lagerbuchse 13 angeordnet, die eine axiale Bohrung besitzt. Ihre Nut am Aussendurchmesser führt eine Manschette des Lenkgetriebes.

Das von der äusseren Lagerschale 9, den Einlagen 7, 8 mit den dazwischen liegenden Abkröpfungen 6 der Spurstangen 1 und 2 sowie der inneren Lagerschale 10 gebildete Federgelenk wird mit einem seine Konstruktionsteile axial durchdringenden Spannbolzen 14 vorgespannt, der gleichzeitig mit einem Gewinde in der Lenkstange 3 befestigt ist. Dabei wird die Vorspannung des Federgelenkes durch die Länge der Hülse 11 begrenzt.

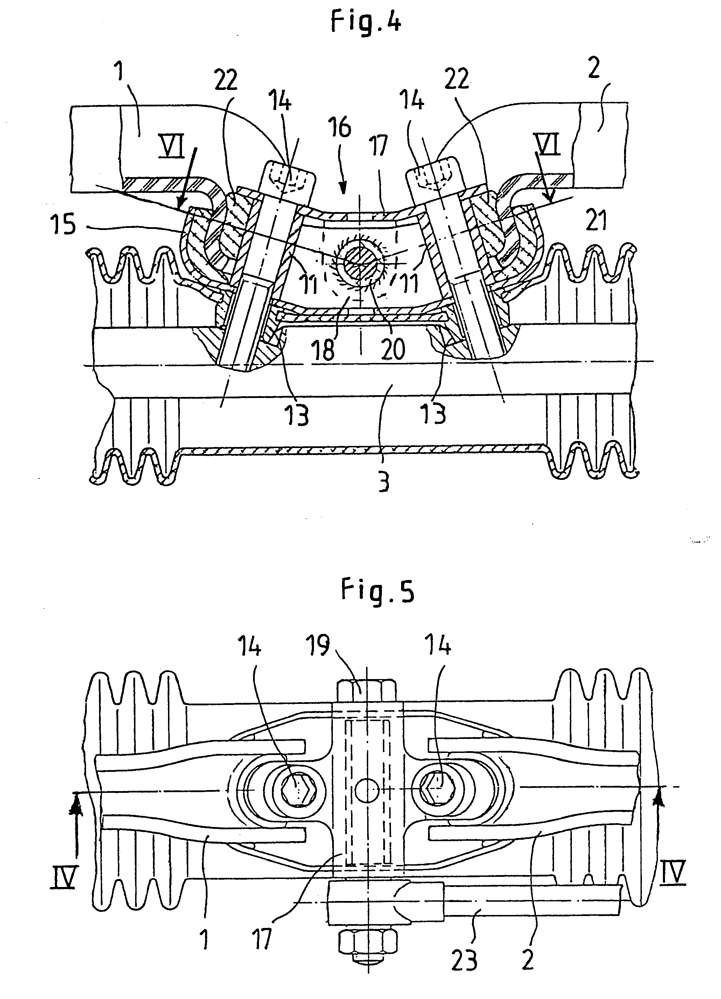

Das in den Fig. 4 bis 6 dargestellte Spurstangengelenk mit zwei Spannbolzen 14 besitzt eine äussere Lagerschale 15 mit ovalem Grundriss und eine innere Lagerschale 16, die von zwei Hülsen 11 und einem diese miteinander verbindenden Spannblech 17 gebildet wird. Das Spannblech 17 besitzt seitlich angeformte und abgewinkelte Lappen 17, die mit Öffnungen versehen sind. Auf diese Weise ist es möglich, die äussere Lagerschale 15 und das Spannblech 17 im vorgespannten Zustand des Federgelenkes mit einem Bolzen 19 zu verbinden, auf dem innerhalb der Lagerschale 15 eine Distanzhülse 20 angeordnet ist.

Bei dieser Ausführungsform des Spurstangengelenkes sind zwei voneinander getrennte äussere Einlagen 21 vorgesehen, die halbschalenförmig ausgebildet sind. Auch die beiden inneren Einlagen 22 sind voneinander getrennt und halbschalenförmig ausgebildet. Im übrigen wird dieses Federgelenk mit zwei Spannbolzen 14 ebenso montiert und vorgespannt wie die zuvor beschriebene Ausführungsform mit nur einem Spannbolzen 14. Mit den zwei Spannbolzen 14 kann eine bessere Verbindung mit der Lenkstange 3 hergestellt werden.

Auf dem Bolzen 19 kann gleichzeitig eine Kolbenstange 23 eines Lenkungsdämpfers gelagert werden.

### Bezugszeichenliste

| | |
|---|---|
| 1 | Spurstange |
| 2 | Spurstange |
| 3 | Lenkstange |
| 4 | Getriebe |
| 5 | Lenker |
| 6 | Abkröpfung |
| 7 | Einlage (äussere) |
| 8 | Einlage (innere) |
| 9 | Lagerschale (äussere) |
| 10 | Lagerschale (innere) |
| 11 | Hülse |
| 12 | Spannscheibe |
| 13 | Lagerbuchse |
| 14 | Spannbolzen |
| 15 | Lagerschale (äussere) |
| 16 | Lagerschale (innere) |
| 17 | Spannblech |
| 18 | Lappen |
| 19 | Bolzen |
| 20 | Distanzhülse |
| 21 | Einlage (äussere) |
| 22 | Einlage (innere) |
| 23 | Kolbenstange |

### Patentansprüche

1. Spurstangengelenk für Kraftfahrzeuge zur Anlenkung der inneren Enden zweier Spurstangen (1, 2) an einer von einem Lenkgetriebe betätigten Lenkstange, wobei die inneren Enden der Spurstangen als angeformte Gelenkteile gestaltet sind, die jeweils zwischen ein äusseres (9, 15) und ein inneres (10, 16) Lagerteil ragen, wobei zwischen den Gelenkteilen und einerseits dem äusseren sowie andererseits dem inneren Lagerteil Einlagen (7, 8; 21, 22) angeordnet sind, und wobei das äussere Lagerteil, die Gelenkteile, die Einlagen und das innere Lagerteil mit wenigstens einem an der Lenkstange befestigten Spannbolzen (14) vorgespannt sind, dadurch gekennzeichnet,

a) dass die Spurstangen (1, 2) U-förmig profiliert und ihre Gelenkteile als Abkröpfungen (6) ausgebildet sind,

b) dass das äussere Lagerteil als topfförmige äussere Lagerschale (9, 15) ausgebildet ist, in die die Abkröpfungen (6) eintauchen,

c) dass das innere Lagerteil als hülsenförmige innere Lagerschale (10, 16) ausgebildet ist und

d) dass die Einlagen (7, 8; 21, 22) federelastisch sind.

2. Spurstangengelenk nach Anspruch 1 mit nur einem Spannbolzen (14), dadurch gekennzeichnet, dass die äussere Lagerschale (9) einen kreisförmigen Grundriss besitzt, dass die äussere Einlage (7) ringförmig ausgebildet ist, dass die inneren Einlagen (8) halbschalenförmig gestaltet sind und dass die innere Lagerschale (10) aus einer Hülse (11) und einer Spannscheibe (12) besteht.

3. Spurstangengelenk nach Anspruch 2, dadurch gekennzeichnet, dass die äussere Lagerschale (9) mit einer Lagerbuchse (13) von der Lenkstange (3) distanziert ist.

4. Spurstangengelenk nach Anspruch 1 mit zwei Spannbolzen (14), dadurch gekennzeichnet, dass die äussere Lagerschale (15) einen ovalen Grundriss besitzt, dass die äusseren und die inneren Einlagen (21, 22) halbschalenförmig gestaltet sind und dass die innere Lagerschale (16) aus zwei Hülsen (11) und einem gemeinsamen Spannblech (17) besteht.

5. Spurstangengelenk nach Anspruch 4, dadurch gekennzeichnet, dass das Spannblech (17) mit seitlichen Lappen (18) auf einem die äussere Lagerschale (15) in ihrer Mitte durchsetzenden Bolzen (19) gesichert ist.

6. Spurstangengelenk nach den Ansprüchen 4 und 5, dadurch gekennzeichnet, dass die äussere Lagerschale (15) mit zwei Lagerbuchsen (13) von der Lenkstange (3) distanziert ist.

7. Spurstangengelenk nach den Ansprüchenb 1 bis 6, dadurch gekennzeichnet, dass die Spurstangen (1, 2) aus Stahlblech oder glasfaserverstärktem Kunststoff hergestellt sind.

8. Spurstangengelenk nach den Ansprüchen 1 bis 7, dadurch gekennzeichnet, dass die federelastischen Einlagen (7, 8; 21, 22) aus Gummi oder einem thermoplastischen Kunststoff hergestellt sind.

9. Spurstangengelenk nach den Ansprüchen 1 bis 7, dadurch gekennzeichnet, dass die federelastischen Einlagen (7, 8; 21, 22) mit der äusseren bzw. der inneren Lagerschale (9, 10; 15, 16) fest verbunden sind.

10. Spurstangengelenk nach den Ansprüchen 1 bis 9, dadurch gekennzeichnet, dass die innere Lagerschale (10, 16) im vorgespannten Zustand des Federgelenkes auf der äusseren Lagerschale (9, 15) abgestützt ist.

**Claims**

1. Track-rod joint for motor vehicles for coupling the inner ends of two track rods (1, 2) to a steering rod actuated by a steering gear, with the inner ends of the track rods being designed as integrally formed joint parts which in each case project between an outer (9, 15) and an inner (10, 16) bearing part, with inserts (7, 8; 21, 22) being arranged between the joint parts and the outer bearing part on the one hand and also the inner bearing part on the other hand, and with the outer bearing part, the joint parts, the inserts and the inner bearing part being preloaded with at least one clamping bolt (14) fixed to the steering rod, characterized in that

a) the track rods (1, 2) are profiled in a U-shape and their joint parts are made as angled portions (6),

b) the outer bearing part is made as a pot-shaped outer bearing shell (9, 15) into which the angled portions (6) plunge,

c) the inner bearing part is made as a sleeve-shaped inner bearing shell (10, 16), and

d) the inserts (7, 8; 21, 22) are spring-elastic.

2. Track-rod joint according to claim 1 having only one clamping bolt (14), characterized in that the outer bearing shell (9) is circular in plan view, in that the outer insert (7) is made in an annular shape, in that the inner inserts (8) are formed in a half-shell shape, and in that the inner bearing shell (10) consists of a sleeve (11) and a clamping disc (12).

3. Track-rod joint according to claim 2, characterized in that the outer bearing shell (9), with a bearing bush (13), is kept at a distance from the steering rod (3).

4. Track-rod joint according to claim 1 having two clamping bolts (14), characterized in that the outer bearing shell (15) is oval in plan view, in that the outer and inner inserts (21, 22) are formed in a half-shell shape, and in that the inner bearing shell (16) consists of two sleeves (11) and a common sheet-metal clamping plate (17).

5. Track-rod joint according to claim 4, characterized in that the sheet-metal clamping plate (17), with lateral tangs (18), is secured on a bolt (19) which penetrates through the outer bearing shell (15) in its centre.

6. Track-rod joint according to claims 4 and 5, characterized in that the outer bearing shell (15), with two bearing sleeves (13), is kept at a distance from the steering rod (3).

7. Track-rod joint according to claims 1 to 6, characterized in that the track rods (1, 2) are made of sheet steel or glass-fibre-reinforced plastic.

8. Track-rod joint according to claims 1 to 7, characterized in that the spring-elastic inserts (7, 8; 21, 22) are made of rubber or a thermoplastic.

9. Track-rod joint according to claims 1 to 7, characterized in that the spring-elastic inserts (7, 8; 21, 22) are firmly connected to the outer and inner bearing shells (9, 10; 15, 16) respectively.

10. Track-rod joint according to claims 1 to 9, characterized in that the inner bearing shell (10, 16), in the preloaded condition of the spring joint, is supported on the outer bearing shell (9, 15).

## Revendications

1. Articulation de barres d'accouplement pour véhicules automobiles, en vue de l'articulation des extrémités internes de deux barres d'accouplement (1, 2) sur une barre directrice actionnée par un mécanisme de direction, les extrémités internes des barres d'accouplement étant réalisées sous la forme de parties d'articulation ménagées solidairement et s'étendant chacune entre des pièces de support externe (9, 15) et interne (10, 16), des garnitures incorporées (7, 8; 21, 22) étant interposées entre les parties d'articulation et d'une part la pièce de support externe, d'autre part la pièce de support interne, la pièce de support externe, les parties d'articulation, les garnitures incorporées et la pièce de support interne étant préchargées par au moins un boulon de tension (14) fixé à la barre directrice, caractérisée par le fait

a) que les barres d'accouplement (1, 2) sont profilées en U et leurs parties d'articulation sont réalisées en tant que coudes (6),

b) que la pièce de support externe est réalisée en tant que cuvette de support externe (9, 15) en forme d'écuelle, dans laquelle les coudes (6) s'engagent,

c) que la pièce de support interne est réalisée en tant que cuvette de support interne (10, 16) en forme de douille et

d) que les garnitures incorporées (7, 8; 21, 22) sont douées d'élasticité.

2. Articulation de barres d'accouplement selon la revendication 1, munie d'un seul boulon de tension (14), caractérisée par le fait que la cuvette de support externe (9) possède une configuration de base circulaire; par le fait que la garniture incorporée externe (7) est de réalisation annulaire; par le fait que les garnitures incorporées internes (8) sont de configuration en demi-coquille; et par le fait que la cuvette de support interne (10) se compose d'un fourreau (11) et d'un disque tendeur (12).

3. Articulation de barres d'accouplement selon la revendication 2, caractérisée par le fait que la cuvette de support externe (9) est maintenue à distance de la barre directrice (3) par un coussinet (13).

4. Articulation de barres d'accouplement selon la revendication 1, munie de deux boulons de tension (14), caractérisée par le fait que la cuvette de support extene (15) possède une forme de base ovale; par le fait que les garnitures incorporées (21, 22) externes et internes sont de configuration en demi-coquille; et par le fait que la cuvette de support interne (16) se compose de deux fourreaux (11) et d'une tôle de tension commune (17).

5. Articulation de barres d'accouplement selon la revendication 4, caractérisée par le fait que la tôle de tension (17) est arrêtée, par des oreilles latérales (18), sur un boulon (19) qui traverse en son centre la cuvette de support externe (15).

6. Articulation de barres d'accouplement selon les revendications 4 et 5, caractérisée par le fait que la cuvette de support externe (15) est maintenue à distance de la barre directrice (3) par deux coussinets (13).

7. Articulation de barres d'accouplement selon les revendications 1 à 6, caractérisée par le fait que les barres d'accouplement (1, 2) sont fabriquées en tôle d'acier ou en une matière plastique renforcée par des fibres de verre.

8. Articulation de barres d'accouplement selon les revendications 1 à 7, caractérisée par le fait que les garnitures incorporées (7, 8; 21, 22) douées d'élasticité sont fabriquées en coutchouc ou en une matière thermoplastique.

9. Articulation de barres d'accouplement selon les revendications 1 à 7, caractérisée par le fait que les garnitures incorporées (7, 8; 21, 22) douées d'élasticité sont reliées rigidement à la cuvette de support respectivement externe ou interne (9, 10; 15, 16).

10. Articulation de barres d'accouplement selon les revendications 1 à 9, caractérisée par le fait que, en condition préchargée de l'articulation élastique, la cuvette de support interne (10, 16) prend appui sur la cuvette de support externe (9, 15).

0 132 597

## Fig.1

## Fig. 2

7

Fig.3

Fig. 6

Fig.7

## Fig.4

## Fig.5